# EUROPEAN PATENT APPLICATION

(11) **EP 4 811 533 A1**
(43) Date of publication of application: **23.09.2026**
(21) Application number: 24914817.2
(22) Date of filing: 12.08.2024
(51) Int. Cl.: H01M 50/567, H01M 50/531, H01M 50/533, H01M 50/552, H01M 50/528

(54) **BATTERY CELL, BATTERY, AND ELECTRICAL DEVICE**

(30) Priority: 02.01.2024 CN 202410002307
(71) Applicant: Contemporary Amperex Technology Co., Limited, Ningde, Fujian 352100 (CN)
(72) Inventor: JIN, Haizu, Ningde, Fujian 352100 (CN); WANG, Peng, Ningde, Fujian 352100 (CN); LI, Quankun, Ningde, Fujian 352100 (CN); ZHENG, Yulian, Ningde, Fujian 352100 (CN); LIN, Denghua, Ningde, Fujian 352100 (CN); CHEN, Wenwei, Ningde, Fujian 352100 (CN)
(74) Representative: Ran, Handong
(86) International application number: PCT/CN2024/111494
(87) International publication number: WO 2025/145595

(57) **Abstract**

Disclosed are a battery cell (20), a battery, and an electrical device. The battery cell (20) comprises: a housing assembly (21), comprising a housing (211), a terminal (212), and a cover plate (213), wherein the housing (211) has a first wall (2111), a hole (211a) is provided in the first wall (2111), the terminal (212) comprises a connecting portion (2122) and a body portion (2121) which are connected to each other, the body portion (2121) is located inside of the first wall (2111), the connecting portion (2122) passes through the hole (211a), the connecting portion (2122) has a flanged portion (201) and a first accommodating recess (202), the flanged portion (201) is located outside the first wall (2111) and is away from the hole (211a), the first accommodating recess (202) is close to the side of the center of the hole (211a), the first accommodating recess (202) comprises at least two stepped recesses, and the cover plate (213) is arranged on one of the at least two stepped recesses close to the body portion (2121); and an electrode assembly (22), wherein the electrode assembly (22) is arranged in the housing (211) and is electrically connected to the body portion (2121) or the connecting portion (2122).

## Description

### CROSS-REFERENCE TO RELATED APPLICATION

The present application is based on Chinese Patent Application No. 202410002307.9 filed on January 2, 2024, and claims the priority to this Chinese Patent Application, the content of which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and service life. However, in the production and manufacturing process of the battery cell in the battery, the post terminal is welded with a cover plate, and there is a reliability problem when the cover plate and the post terminal are welded, thereby affecting the reliability of the battery cell.

### SUMMARY

Embodiments of the present application provide a battery cell, a battery, and an electric device, which can effectively improve the reliability of the battery cell, thereby improving the reliability of the battery and the electric device.

In a first aspect, the embodiments of the present application provide a battery cell. The battery cell includes: a housing assembly, including a housing, a post terminal, and a cover plate, where the housing is provided with a first wall, the first wall is provided with a via, the post terminal includes a body part and a connecting part connected to each other, the body part is located on an inner side of the first wall, the connecting part is provided in the via in a penetrating manner, the connecting part is provided with a folded part and a first accommodating groove, the folded part is located on an outer side of the first wall and is distal to the via, the first accommodating groove is proximal to a center side of the via, the first accommodating groove includes at least two stepped grooves, and the cover plate is disposed on one of the at least two stepped grooves proximal to the body part; and an electrode assembly, where the electrode assembly is disposed within the housing and is electrically connected to the body part or the connecting part.

In the above technical solutions, by arranging the post terminal to include the body part and the connecting part connected to each other, where the connecting part is provided with the first accommodating groove, and the first accommodating groove includes the at least two stepped grooves, when the connecting part of the post terminal is folded to form the folded part, since the probability of situations such as a collapsed edge and a large rounded corner appearing in the stepped groove proximal to the body part is relatively low, by disposing the cover plate on the stepped groove proximal to the body part, the probability of a relatively large gap forming between the cover plate and the corresponding stepped groove can be reduced, thereby reducing the probability of developing problems such as spatter during welding, which is conducive to improving the reliability of the battery cell. Secondly, since the first accommodating groove includes the at least two stepped grooves, a riveting mold can effectively extrude the material during the riveting and flanging process, improving the regularity of the dimensions of a welding interface.

In some embodiments of the present application, the number of the stepped grooves is at least three. In this technical solution, by setting the number of the stepped grooves to be at least three, at least one stepped groove may be reserved between a stepped groove proximal to the folded part and the stepped groove proximal to the body part, which further reduces the probability of the collapsed edge and the large rounded corner appearing in the stepped groove proximal to the body part. This can further lower the probability of situations such as spatter occurring during the welding of the cover plate and the connecting part, and can further improve the reliability of the battery cell.

In some embodiments of the present application, a stepped groove where the cover plate is located is a first groove, and in a groove depth direction of the first groove, a thickness of the cover plate is less than or equal to a groove depth of the first groove.

In the above technical solutions, in the groove depth direction of the first groove, the thickness of the cover plate may be less than the groove depth of the first groove, and an outer surface of the cover plate is lower than an outer edge of the first groove, which can increase the distance from the outer surface of the cover plate to the collapsed edge and the large rounded corner, and reduce the impact of the collapsed edge and the large rounded corner on the welding of the cover plate. In the groove depth direction of the first groove, the thickness of the cover plate may also be equal to the groove depth of the first groove. The outer surface of the cover plate is flush with the outer edge of the first groove. This is conducive to weld mark formation and improves the welding quality in one aspect, and is conducive to improving the welding aesthetics of the cover plate and the connecting part in another aspect.

In some embodiments of the present application, the groove depth of the first groove is greater than or equal to 0.6 mm. In this technical solution, by setting the groove depth of the first groove to be greater than or equal to 0.6 mm, the first groove can have an appropriate groove depth, ensuring the post terminal has high strength. At the same time, this allows the cover plate to have an adapted thickness, thereby improving the strength of the cover plate and the connecting part after welding, improving the reliability of the housing assembly, and further improving the reliability of the battery cell.

In some embodiments of the present application, the stepped groove where the cover plate is located is the first groove, and the first groove is located on a side of the first wall distal to the body part. In this technical solution, since the first groove is connected to the cover plate, a position of the first groove relative to the first wall affects a position of the cover plate relative to the first wall. By disposing the first groove on the side of the first wall distal to the body part, the cover plate is located on the outer side of the first wall, keeping a relatively long distance from an inner side of the housing. This enables a relatively low probability of the cover plate coming into contact with the electrode assembly, which is conducive to the welding of the cover plate to the connecting part or the body part.

In some embodiments of the present application, the stepped groove where the cover plate is located is the first groove, the first groove is provided with a first groove surface, a cover side surface is formed on a peripheral side of the cover plate, the cover side surface and the first groove surface are disposed opposite to each other, and a gap is formed between the cover side surface and the first groove surface. In this technical solution, the gap formed between the cover side surface and the first groove surface can be used to place solder, such that the cover plate and the first groove can be connected by means of filler welding. This can enable the cover plate and the first groove to have a relatively fast welding speed, and impose relatively low requirements on welding assembly, which is conducive to improving the welding efficiency.

In some embodiments of the present application, the stepped groove where the cover plate is located is the first groove, the first groove is provided with a first groove surface, a cover side surface is formed on a peripheral side of the cover plate, and the cover side surface and the first groove surface are disposed opposite to each other and abut against each other. In this technical solution, the gap between the cover side surface and the first groove surface is relatively small, such that the cover plate and the first groove may be connected by means of autogenous welding. This can enable the cover plate and the first groove to have high connection quality, make welding easier, and no additional material is required for the weld seam, which is conducive to cost reduction.

In some embodiments of the present application, the housing includes a housing body and an end cover, the housing body is provided with an opening, the opening is lidded with the end cover, and the housing body or the end cover forms the first wall.

In the above technical solutions, the housing body can form the first wall, such that the post terminal is disposed on the housing body of the battery cell. Adopting this solution can simplify the structure of the end cover, which is conducive to the lightweight design of the end cover. Since the end cover is connected to the housing body, the simple structure and light weight of the end cover can improve the connection reliability between the end cover and the housing body. The end cover can also form the first wall, such that the post terminal is disposed on the end cover of the battery cell. By adopting this solution, since the end cover and the housing body are separate components, the connection between the post terminal and the first wall is relatively simple. This can reduce the mounting process requirements of the post terminal, improve the mounting efficiency of the post terminal, and lower the costs.

In some embodiments of the present application, the connecting part is provided with a second accommodating groove, the second accommodating groove is in communication with the first accommodating groove, the body part is provided with a communication hole in communication with the second accommodating groove, the electrode assembly includes an active substance-coated part and a conductive part connected to each other, and the conductive part is provided in the communication hole in a penetrating manner and is electrically connected to the body part or the connecting part.

In the above technical solutions, by disposing the second accommodating groove in communication with the first accommodating groove on the connecting part, and disposing the communication hole in communication with the second accommodating groove on the body part, with the conductive part provided in the communication hole in a penetrating manner and electrically connected to the body part or the connecting part, it can not only reduce the weight of the post terminal, but also arrange the conductive part of the electrode assembly in the second accommodating groove, saving the internal space of the housing. This thereby provides more space for the active substance-coated part of the electrode assembly, which is conducive to arranging a larger-volume active substance-coated part and further improves the energy density of the battery cell.

In some embodiments of the present application, one of the at least two stepped grooves located on an outermost side of the housing is a second groove; and in a groove depth direction of the second groove, a groove depth of the second groove is T1, and a thickness of the folded part is T2, where T1/T2 ≥ 0.5.

In the above technical solutions, by setting the ratio of the groove depth T1 of the second groove to the thickness T2 of the folded part to be greater than or equal to 0.5 in the groove depth direction of the second groove, the second groove can have an appropriate groove depth. When a part of the connecting part is riveted and flanged to form the folded part, the second groove has a relatively large groove depth to accommodate the collapsed edge and the large rounded corner, which reduces the probability of the collapsed edge and the large rounded corner spreading out of the second groove. This is conducive to lowering the probability of a relatively large gap forming between the cover plate and the first groove, and improving the welding reliability of the cover plate and the first groove.

In some embodiments of the present application, the stepped groove where the cover plate is located is the first groove, the first groove is provided with the first groove surface opposite to a peripheral side surface of the cover plate, the connecting part is provided with a first side surface proximal to a side wall of the via and a second side surface proximal to a center of the via, a distance between the first side surface and the second side surface is L1, and a distance between the first groove surface and the first side surface is L2, where 1/2 ≤ L2/L1 ≤ 2/3.

In the above technical solutions, by setting the ratio of the distance L1 between the first side surface and the second side surface of the connecting part to the distance L2 between the first groove surface and the first side surface within a range of 1/2 to 2/3, in one aspect, this can enable a part of the connecting part proximal to the folded part to have adapted strength, reduce the probability of a local weak point appearing and the probability of cracking caused by stress concentration, and improve the reliability of the connecting part. In another aspect, this can enable the first groove to have an appropriate groove surface to support the cover plate, reduce the occurrence of poor mounting reliability between the cover plate and the first groove due to insufficient support, and is conducive to improving the mounting reliability between the cover plate and the first groove.

In some embodiments of the present application, the stepped groove where the cover plate is located is the first groove, the first groove is provided with the first groove surface and a second groove surface adjacent to each other, the first groove surface is opposite to the peripheral side surface of the cover plate, the second groove surface is proximal to an inner side of the housing, and a chamfer is formed between the first groove surface and the first groove surface. In this technical solution, the chamfer can provide a guiding effect for the cover plate to enter the groove, improving the assembly convenience of the cover plate. In addition, the chamfer can also facilitate draft when the first groove surface is formed on the connecting part, which is conducive to reducing the manufacturing difficulty of the connecting part.

In some embodiments of the present application, an angle of the chamfer is 5 degrees to 15 degrees. In this technical solution, by setting the angle of the chamfer within a range of 5 degrees to 15 degrees, the chamfer is kept in an appropriate angle range. In one aspect, this enables the chamfer to have a relatively good guiding effect and relatively favorable draft convenience; and in another aspect, this also enables a straight groove surface of the first groove to have an appropriate height, such that the cover plate and the first groove have good bonding performance and connection reliability.

In some embodiments of the present application, in the groove depth direction of the first groove, a height of the first groove surface is greater than or equal to 0.4 mm. In this technical solution, by setting the height of the first groove surface to be greater than or equal to 0.4 mm in the groove depth direction of the first groove, an effective straight-edge welding area is formed between the cover plate and the first groove surface during welding. This in turn enables the cover plate and the first groove to have high welding strength, improving the connection reliability of the cover plate and the first groove.

In a second aspect, the present application further provides a battery, which includes the battery cell as described above.

In the above technical solutions, the adoption of the battery cell can reduce the probability of a relatively large gap forming between the cover plate and the first accommodating groove when the post terminal is riveted and flanged, and lower the probability of situations such as spatter occurring during the welding of the cover plate. This enables the battery cell to have high reliability, thereby improving the reliability of the battery.

In a third aspect, the present application further provides an electric device, which includes the battery cell or the battery as described above.

In the above technical solutions, the adoption of the battery cell can reduce the probability of a relatively large gap forming between the cover plate and the first accommodating groove when the post terminal is riveted and flanged, and lower the probability of situations such as spatter occurring during the welding of the cover plate. This enables the battery cell and the battery to have high reliability, thereby improving the reliability of the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a structure of a battery according to some embodiments of the present application;
FIG. 3 is a schematic three-dimensional structural diagram of a battery cell according to some embodiments of the present application;
FIG. 4 is a top view of a battery cell according to some embodiments of the present application;
FIG. 5 is a schematic diagram of FIG. 4 taken along a line A-A;
FIG. 6 is a partial enlarged view of I in FIG. 5;
FIG. 7 is a partial enlarged view of II in FIG. 5;
FIG. 8 is a partial schematic structural diagram of a battery cell according to some embodiments of the present application; and
FIG. 9 is an exploded view of a battery cell according to some embodiments of the present application.

### Reference numerals:

1000: vehicle; 100: battery; 10: case; 11: first case body; 12: second case body; 20: battery cell; 21: housing assembly; 211: housing; 2111: first wall; 2111a: pressure relief hole; 2112: housing body; 2112a: opening; 2113: end cover; 211a: via; 212: post terminal; 2121: body part; 2121a: communication hole; 2122: connecting part; 2122a: first side surface; 2122b: second side surface; 201: folded part; 202: first accommodating groove; 2021: first groove; 2021a: first groove surface; 2021b: second groove surface; 2021c: chamfer; 2022: second groove; 203: second accommodating groove; 2001: positive electrode post terminal; 2002: negative electrode post terminal; 213: cover plate; 213a: cover side surface; 22: electrode assembly; 221: active substance-coated part; 222: conductive part; 23: first insulating member; 24: second insulating member; 25: sealing member; 26: pressure relief part; 261: anti-explosion sheet; 262: protective patch; 200: controller; 300: motor; X: first direction; Y: second direction; and Z: third direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module group, a battery pack, or the like. The battery generally includes a case that is configured to encapsulate one or a plurality of battery cells or a plurality of battery module groups. The case can prevent liquid or other foreign matters from affecting the charging or discharging of the battery cells.

The battery cell includes a shell, an electrode assembly, and an electrolyte, and the shell is configured to accommodate the electrode assembly and the electrolyte. The electrode assembly consists of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, there are a plurality of positive electrode tabs that are stacked together, and there are a plurality of negative electrode tabs that are stacked together.

The material of the separator may be polypropylene (PP), polyethylene (PE), or the like. In addition, the electrode assembly may be of a winding structure or a stacking structure, but the embodiments of the present application are not limited thereto.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and service life. However, in the production and manufacturing process of the battery cell in the battery, the post terminal is welded with a cover plate, but a reliability problem is prone to arise when the cover plate and the post terminal are welded, thereby affecting the reliability of the battery cell.

The inventors have found that in the battery cell structure, the post terminal is provided with an accommodating groove. During the manufacturing of the battery cell, the post terminal is provided in the via of the housing in a penetrating manner, and the part of the peripheral wall of the post terminal forming the accommodating groove can be fixed to the housing by means of riveting and flanging. At this time, the flanged part of the post terminal forms a folded part, and the cover plate can be arranged in the accommodating groove and welded to the inner side of the folded part to be fixed on the post terminal. The cover plate can then be configured to electrically connect an external conductor. However, in this process, due to the influence of the material thickness in the area where the folded part is located on the post terminal, the folded portion of the folded part proximal to the accommodating groove is prone to problems such as a collapsed edge and a large rounded corner. This will result in a relatively large gap when the post terminal and the cover plate are assembled at the riveting position during welding, and problems such as spatter are likely to occur during welding, thereby affecting the reliability of the battery cell.

Based on the above considerations, to solve the problem that situations such as spatter are prone to occur during the welding of the post terminal and the cover plate due to situations such as the collapsed edge and the large rounded corner of the folded part of the post terminal, the inventors have designed a battery cell. The battery cell includes a housing assembly and an electrode assembly. The housing assembly includes a housing, a post terminal, and a cover plate, where the housing is provided with a first wall, the first wall is provided with a via, the post terminal includes a body part and a connecting part connected to each other, the body part is located on the inner side of the first wall, the connecting part is provided in the via in a penetrating manner, the connecting part is provided with a folded part and a first accommodating groove, the folded part is located on the outer side of the first wall and is distal to the via, the first accommodating groove is proximal to the center side of the via, the first accommodating groove includes at least two stepped grooves, and the cover plate is disposed on one of the at least two stepped grooves proximal to the body part. The electrode assembly is disposed within the housing and is electrically connected to the body part or the connecting part.

In the battery cell with this structure, by arranging the post terminal to include the body part and the connecting part connected to each other, where the connecting part is provided with the first accommodating groove, and the first accommodating groove includes the at least two stepped grooves, when the connecting part of the post terminal is folded to form the folded part, since the probability of situations such as a collapsed edge and a large rounded corner appearing in the stepped groove proximal to the body part is relatively low, by disposing the cover plate on the stepped groove proximal to the body part, the probability of a relatively large gap forming between the cover plate and the corresponding stepped groove can be reduced, reducing the probability of problems such as spatter occurring during welding, which is conducive to improving the reliability of the battery cell.

The battery disclosed in the embodiments of the present application may, but is not limited to, be used in electric devices such as vehicles, ships, or aircraft. The power system of the electric device may be composed of the battery cell, the battery, or the like disclosed in the present application.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, or the like.

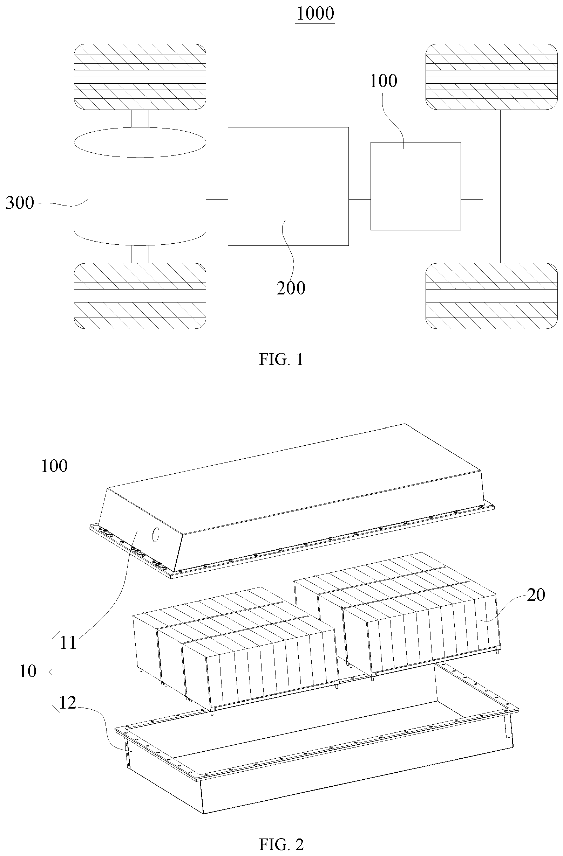

In the following embodiments, for ease of description, the present application is illustrated by taking a vehicle 1000 as an example of the electric device according to an embodiment of the present application. Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of the structure of a battery 100 according to some embodiments of the present application. the battery 100 includes a case 10 and a plurality of battery cells 20. The battery cells 20 are configured to be accommodated in the case 10. The case 10 is configured to provide an assembly space for the battery cells 20, and the case 10 may be in various structures. In some embodiments, the case 10 may include a first case body 11 and a second case body 12. The first case body 11 and the second case body 12 are mutually lidded with each other. The first case body 11 and the second case body 12 jointly define an assembly space for accommodating the battery cells 20. The second case body 12 may be of a hollow structure with one end open, and the first case body 11 may be of a plate-shaped structure. The first case body 11 lids the open side of the second case body 12, such that the first case body 11 and the second case body 12 jointly define an assembly space; the first case body 11 and the second case body 12 may also both be of a hollow structure with one side open, and the open side of the first case body 11 lids the open side of the second case body 12. Certainly, the case 10 formed by the first case body 11 and the second case body 12 may be in various shapes, such as a cylinder and a rectangular parallelepiped.

In the battery 100, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component that is configured to achieve electrical connection among the plurality of battery cells 20.

Referring to FIG. 2, FIG. 2 is an exploded view of the structure of a battery 100 according to some embodiments of the present application. The battery 100 includes a plurality of rows of battery cells 20, the plurality of rows of battery cells 20 can be arranged in the length direction of the case 10, and each row of battery cells 20 includes a plurality of battery cells 20 arranged in the width direction of the case 10; alternatively, a plurality of rows of the battery cells 20 can be arranged in the width direction of the case 10, and each row of the battery cells 20 includes a plurality of battery cells 20 arranged in the length direction of the case 10. Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes. Illustratively, in FIG. 2, the battery cell 20 is in the shape of a rectangular parallelepiped.

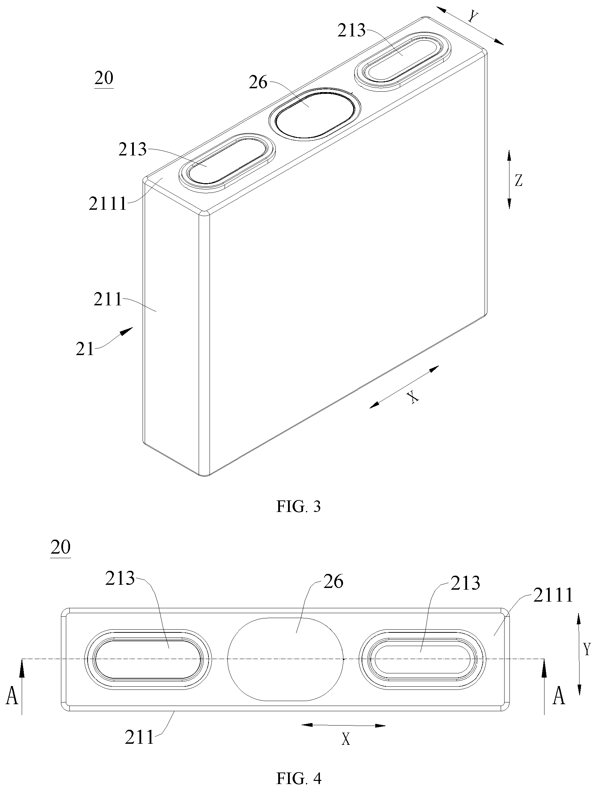

According to some embodiments of the present application, referring to FIG. 3 to FIG. 6. FIG. 3 shows a battery cell 20 provided in some embodiments of the present application, including a housing assembly 21 and an electrode assembly 22. The housing assembly 21 includes a housing 211, a post terminal 212, and a cover plate 213. The housing 211 is provided with a first wall 2111, and the first wall 2111 is provided with a via 211a. The post terminal 212 includes a body part 2121 and a connecting part 2122 connected to each other. The body part 2121 is located on the inner side of the first wall 2111, and the connecting part 2122 is provided in the via 211a in a penetrating manner. The connecting part 2122 is provided with a folded part 201 and a first accommodating groove 202. The folded part 201 is located on the outer side of the first wall 2111 and is distal to the via 211a, and the first accommodating groove 202 is proximal to the center side of the via 211a. The first accommodating groove 202 includes at least two stepped grooves, and the cover plate 213 is disposed on one of the at least two stepped grooves proximal to the body part 2121. The electrode assembly 22 is disposed within the housing 211 and is electrically connected to the body part 2121 or the connecting part 2122.

According to different shapes, the housing 211 may be, but is not limited to, cylindrical, flat, rectangular parallelepiped-shaped, or in other shapes. Thus, the housing 211 is provided with a plurality of wall parts. Illustratively, referring to FIG. 3, when the housing 211 is a rectangular parallelepiped, the housing 211 is provided with small surface walls at two ends in a first direction X, large surface walls at two ends in a second direction Y, and a top wall and a bottom wall at two ends in a third direction Z. The first wall 2111 may be one of the small surface walls, the large surface walls, the top wall, and the bottom wall.

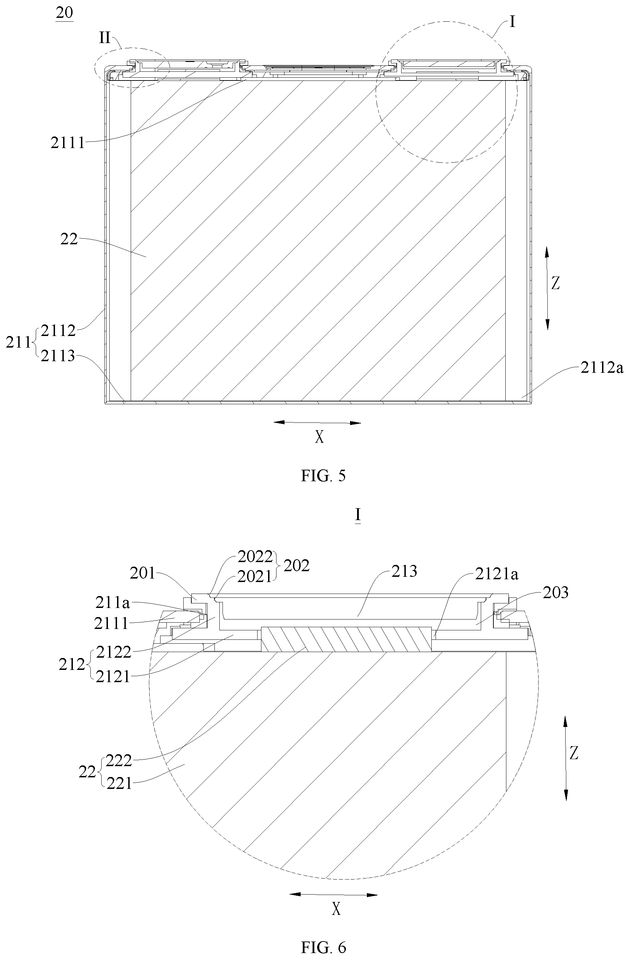

Referring to FIG. 6, the post terminal 212 includes a body part 2121 and a connecting part 2122 connected to each other. The connecting part 2122 is provided in the via 211a in a penetrating manner and is configured to be electrically connected to an external conductive component. The body part 2121 is located on the inner side of the first wall 2111, which can play a limiting role and reduce the probability of the connecting part 2122 detaching from the housing 211.

The folded part 201 may play a role of limiting and fixing, so as to fix the connecting part 2122 to the housing 211. Referring to FIG. 6, the folded part 201 and the body part 2121 can limit the connecting part 2122 in the third direction Z of the first wall 2111, improving the connection reliability between the post terminal 212 and the housing 211.

The first accommodating groove 202 is configured to accommodate the cover plate 213. Since the first accommodating groove 202 includes at least two stepped grooves, when the connecting part 2122 forms the folded part 201 by means of riveting and flanging, due to the influence of the material thickness in the area where the folded part 201 is located, a collapsed edge and a large rounded corner tend to form on the stepped groove proximal to the folded part 201. In contrast, the stepped groove proximal to the body part 2121 is distal to the folded part 201, so the probability of a collapsed edge and a large rounded corner forming thereon is relatively low. By disposing the cover plate 213 on the stepped groove proximal to the body part 2121, the probability of a relatively large gap forming between the cover plate 213 and the corresponding stepped groove can be reduced, and the probability of situations such as spatter occurring during welding of the cover plate 213 and the post terminal 212 can also be lowered.

For the electrode assembly 22, reference may be made to the foregoing explanation, and details are not repeated herein. The electrode assembly 22 may be electrically connected to the body part 2121, or the electrode assembly 22 may be electrically connected to the connecting part 2122.

In the above technical solutions, by arranging the post terminal 212 to include the body part 2121 and the connecting part 2122 connected to each other, where the connecting part 2122 is provided with the first accommodating groove 202, and the first accommodating groove 202 includes the at least two stepped grooves, when the connecting part 2122 of the post terminal 212 is folded to form the folded part 201, the probability of situations such as the collapsed edge and the large rounded corner appearing in the stepped groove proximal to the body part 2121 is relatively low due to the first accommodating groove 202 including the at least two stepped grooves. By disposing the cover plate 213 on the stepped groove proximal to the body part 2121, the probability of the relatively large gap forming between the cover plate 213 and the corresponding stepped groove can be reduced, thereby reducing the probability of problems such as spatter occurring during welding, which is conducive to improving the reliability of the battery cell 20. Secondly, since the first accommodating groove 202 includes the at least two stepped grooves, a riveting mold can effectively extrude the material during the riveting and flanging process, improving the regularity of the dimensions of a welding interface.

In some embodiments of the present application, the number of the stepped grooves is at least three. It can be understood that the number of the stepped grooves may be, but is not limited to, three, four, five, six, or the like.

The number of the stepped grooves being at least three means that at least one stepped groove is further disposed between the stepped groove proximal to the folded part 201 and the stepped groove proximal to the body part 2121. When the connecting part 2122 is partially folded to form the folded part 201, the stepped groove at the intermediate position among the at least three stepped grooves can form a buffer region. When the collapsed edge and the large rounded corner are relatively large, under the protection of the stepped groove at the intermediate position, the collapsed edge and the large rounded corner can spread to the stepped groove at the intermediate position and are not likely to spread to the stepped groove proximal to the body part 2121. That is, the adoption of the above structure can further reduce the probability of the collapsed edge and the large rounded corner appearing in the stepped groove proximal to the body part 2121, thereby further reducing the probability of the relatively large gap forming between the cover plate 213 and the stepped groove.

In the above technical solutions, by setting the number of the stepped grooves to be at least three, at least one stepped groove may be reserved between the stepped groove proximal to the folded part 201 and the stepped groove proximal to the body part 2121, which further reduces the probability of the collapsed edge and the large rounded corner appearing in the stepped groove proximal to the body part 2121. This can further lower the probability of situations such as spatter occurring during the welding of the cover plate 213 and the connecting part 2122, and can further improve the reliability of the battery cell 20.

In some embodiments of the present application, referring to FIG. 6, FIG. 7, and FIG. 8, a stepped groove where the cover plate 213 is located is a first groove 2021, and in a groove depth direction of the first groove 2021, the thickness of the cover plate 213 is less than or equal to the groove depth of the first groove 2021.

Illustratively, the "groove depth direction of the first groove 2021" may refer to the third direction Z in FIG. 6.

In the above technical solutions, in the groove depth direction of the first groove 2021, the thickness of the cover plate 213 may be less than the groove depth of the first groove 2021. In this solution, the outer surface of the cover plate 213 is lower than the outer edge of the first groove 2021, which can increase the distance from the outer surface of the cover plate 213 to the collapsed edge and the large rounded corner, and reduce the impact of the collapsed edge and the large rounded corner on the welding of the cover plate 213. In the groove depth direction of the first groove 2021, the thickness of the cover plate 213 may also be equal to the groove depth of the first groove 2021. In this solution, the outer surface of the cover plate 213 is flush with the outer edge of the first groove 2021. This is conducive to weld mark formation and improves the welding quality in one aspect, and is conducive to improving the welding aesthetics of the cover plate 213 and the connecting part 2122 in another aspect.

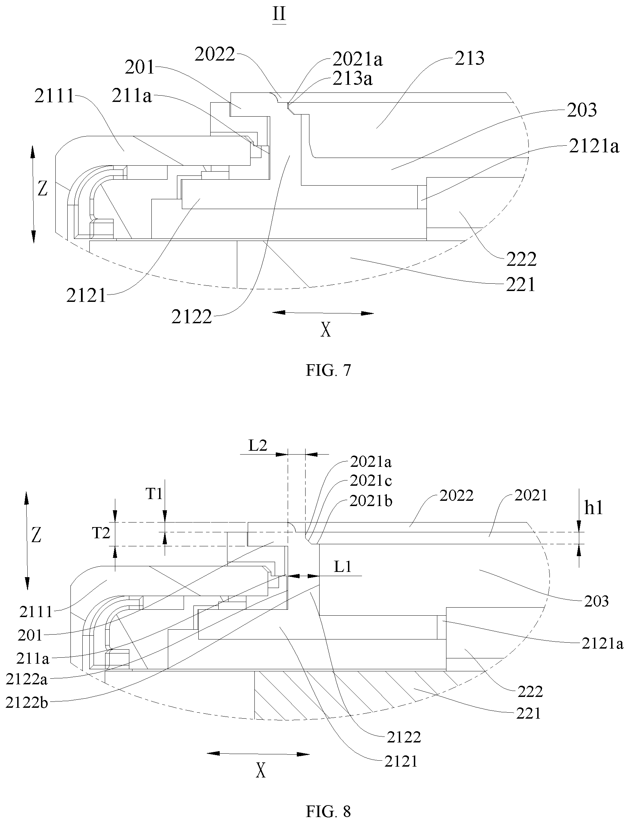

In some embodiments of the present application, referring to FIG. 8, the groove depth of the first groove 2021 is greater than or equal to 0.6 mm.

The groove depth of the first groove 2021 may be h1, and h1 may be, but is not limited to, 0.6 mm, 0.62 mm, 0.65 mm, 0.68 mm, 0.7 mm, 0.72 mm, 0.75 mm, 0.78 mm, 0.8 mm, 0.82 mm, 0.85 mm, 0.88 mm, 0.9 mm, 0.92 mm, 0.95 mm, 0.98 mm, 1.0 mm, 1.2 mm, 2.0 mm, or the like.

Since the cover plate 213 is disposed in the first groove 2021, if the groove depth h1 of the first groove 2021 is less than 0.6 mm, the groove depth of the first groove 2021 is relatively small, the thickness of the cover plate 213 is relatively small, and consequently, the depth of a weld pool formed when the cover plate 213 is welded to the connecting part 2122 (which may refer to a dimension in the third direction Z in FIG. 6) is also relatively small. Therefore, the bonding performance between the cover plate 213 and the connecting part 2122 is poor, leading to low strength between the cover plate 213 and the connecting part 2122 after welding, which affects the reliability of the housing assembly 21. Secondly, referring to FIG. 6, the post terminal 212 is subjected to a thrust working condition in the third direction Z. A small groove depth of the first groove 2021 will cause the post terminal 212 to be prone to crushing under a force-bearing working condition in the third direction Z.

In the above technical solutions, by setting the groove depth of the first groove 2021 to be greater than or equal to 0.6 mm, the first groove 2021 can have an appropriate groove depth, ensuring that the post terminal 212 has high strength. At the same time, this allows the cover plate 213 to have an adapted thickness, thereby improving the strength between the cover plate 213 and the connecting part 2122 after welding, improving the reliability of the housing assembly 21, and further improving the reliability of the battery cell 20.

In some embodiments of the present application, referring to FIG. 6, FIG. 7, and FIG. 8, the stepped groove where the cover plate 213 is located is the first groove 2021, and the first groove 2021 is located on the side of the first wall 2111 distal to the body part 2121.

It can be understood that the first groove 2021 and the body part 2121 are located on opposite sides of the first wall 2111. Illustratively, referring to FIG. 6, the third direction Z may refer to an upper-lower direction of the housing 211, the first groove 2021 is located on the upper side of the first wall 2111, and the body part 2121 is located on the lower side of the first wall 2111.

In the above technical solutions, since the first groove 2021 is connected to the cover plate 213, the position of the first groove 2021 relative to the first wall 2111 affects the position of the cover plate 213 relative to the first wall 2111. By disposing the first groove 2021 on the side of the first wall 2111 distal to the body part 2121, the cover plate 213 is located on the outer side of the first wall 2111, keeping a relatively long distance from the inner side of the housing 211. This enables a relatively low probability of the cover plate 213 coming into contact with the electrode assembly 22, which is conducive to the welding of the cover plate 213 to the connecting part 2122 or the body part 2121.

In some embodiments of the present application, the stepped groove where the cover plate 213 is located is the first groove 2021, the first groove 2021 is provided with a first groove surface 2021a, a cover side surface 213a is formed on the peripheral side of the cover plate 213, the cover side surface 213a and the first groove surface 2021a are disposed opposite to each other, and a gap is formed between the cover side surface 213a and the first groove surface 2021a.

In the above technical solutions, the gap formed between the cover side surface 213a and the first groove surface 2021a can be used to place solder, such that the cover plate 213 and the first groove 2021 can be connected by means of filler welding. This can enable the cover plate 213 and the first groove 2021 to have a relatively fast welding speed, and impose relatively low requirements on welding assembly, which is conducive to improving the welding efficiency.

In some embodiments of the present application, referring to FIG. 7 and FIG. 8, the stepped groove where the cover plate 213 is located is the first groove 2021, the first groove 2021 is provided with a first groove surface 2021a, a cover side surface 213a is formed on the peripheral side of the cover plate 213, and the cover side surface 213a and the first groove surface 2021a are disposed opposite to each other and abut against each other.

In the above technical solutions, the gap between the cover side surface 213a and the first groove surface 2021a is relatively small, such that the cover plate 213 and the first groove 2021 can be connected by means of autogenous welding. This can enable the cover plate 213 and the first groove 2021 to have high connection quality, making welding easier, and in addition, no additional material is required for the weld seam, which is conducive to cost reduction.

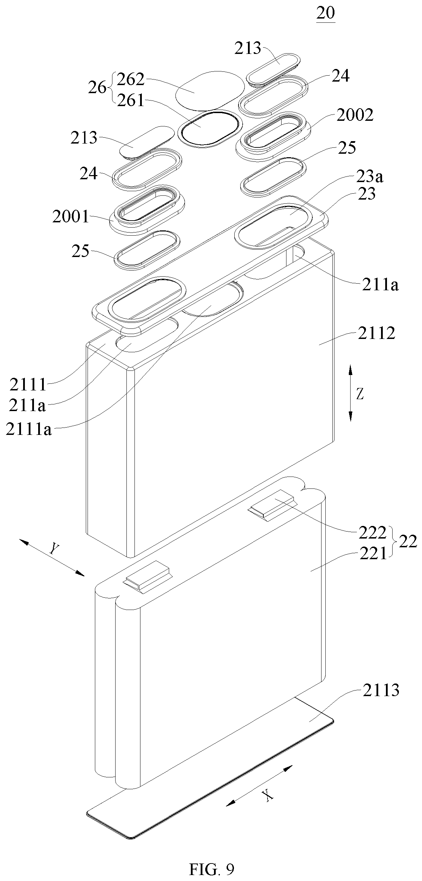

In some embodiments of the present application, referring to FIG. 5 and FIG. 9, the housing 211 includes a housing body 2112 and an end cover 2113, the housing body 2112 is provided with an opening 2112a, the opening 2112a is lidded with the end cover 2113, and the housing body 2112 or the end cover 2113 forms the first wall 2111.

In the above technical solutions, the housing body 2112 can form the first wall 2111, such that the post terminal 212 is disposed on the housing body 2112 of the battery cell 20. This simplifies the structure of the end cover 2113, which is conducive to the lightweight design of the end cover 2113. Since the end cover 2113 is connected to the housing body 2112, the simple structure and light weight of the end cover 2113 can improve the connection reliability between the end cover 2113 and the housing body 2112. The end cover 2113 can also form the first wall 2111, such that the post terminal 212 is disposed on the end cover 2113 of the battery cell 20. Since the end cover 2113 and the housing body 2112 are separate components, the connection between the post terminal 212 and the first wall 2111 is relatively simple. This can reduce the mounting process requirements of the post terminal 212, improve the mounting efficiency of the post terminal 212, and lower the costs.

In some embodiments of the present application, the housing body 2112 may be, but is not limited to, an aluminum housing, a steel housing, or the like.

In some embodiments of the present application, referring to FIG. 6, FIG. 7, and FIG. 8, the connecting part 2122 is provided with a second accommodating groove 203, the second accommodating groove 203 is in communication with the first accommodating groove 202, the body part 2121 is provided with a communication hole 2121a in communication with the second accommodating groove 203, the electrode assembly 22 includes an active substance-coated part 221 and a conductive part 222 connected to each other, and the conductive part 222 is provided in the communication hole 2121a in a penetrating manner and is electrically connected to the body part 2121 or the connecting part 2122.

The conductive part 222 may refer to a conductive component connecting the active substance-coated part 221 and the post terminal 212. For example, the conductive part 222 may be a tab. In one aspect, the second accommodating groove 203 can work together with the first accommodating groove 202 to achieve a weight reduction effect, which can reduce the weight of the connecting part 2122 and is conducive to improving the energy density of the battery cell 20. In another aspect, the second accommodating groove 203 can function to accommodate a part of the conductive part 222. The conductive part 222 passes through the communication hole 2121a to be electrically connected to the post terminal 212, which is conducive to reducing the space occupied by the conductive part 222 in the housing 211, saves the internal space of the housing 211, and allows a larger-sized active substance-coated part 221 to be arranged within the housing 211, thereby further improving the energy density of the battery cell 20.

The conductive part 222 may be electrically connected to the body part 2121 after passing through the communication hole 2121a, or the conductive part 222 may be electrically connected to the connecting part 2122 after passing through the communication hole 2121a.

In the above technical solutions, by disposing the second accommodating groove 203 in communication with the first accommodating groove 202 on the connecting part 2122, and disposing the communication hole 2121a in communication with the second accommodating groove 203 on the body part 2121, with the conductive part 222 provided in the communication hole 2121a in a penetrating manner and electrically connected to the body part 2121 or the connecting part 2122, it can not only reduce the weight of the post terminal 212, but also arrange the conductive part 222 of the electrode assembly 22 in the second accommodating groove 203, saving the internal space of the housing 211. This thereby provides more space for the active substance-coated part 221 of the electrode assembly 22, which is conducive to arranging a larger-volume active substance-coated part 221 and further improves the energy density of the battery cell 20.

In some embodiments of the present application, referring to FIG. 8, one of the at least two stepped grooves located on the outermost side of the housing 211 is a second groove 2022; and in a groove depth direction of the second groove 2022, the groove depth of the second groove 2022 is T1, and the thickness of the folded part 201 is T2, where T1/T2 ≥ 0.5.

The "groove depth direction of the second groove 2022" may be the third direction Z in FIG. 8.

T1/T2 may be, but is not limited to, 0.5, 0.52, 0.54, 0.56, 0.58, 0.60, 0.62, 0.64, 0.66, 0.68, 0.7, 0.72, 0.74, 0.76, 0.8, or the like.

When a part of the connecting part 2122 is riveted and flanged to form the folded part 201, a collapsed edge and a large rounded corner are formed on the side of the folded part 201 proximal to the second groove 2022. If T1/T2 is less than 1/2, the groove depth of the second groove 2022 is relatively small, and the probability of the collapsed edge and the large rounded corner spreading out of the second groove 2022 is increased. This leads to an increased probability of the collapsed edge and the large rounded corner occurring in the first groove 2021, which is not conducive to reducing the probability of a relatively large gap forming between the cover plate 213 and the first groove 2021 when the cover plate 213 is arranged in the first groove 2021.

In the above technical solutions, by setting the ratio between the groove depth T1 of the second groove 2022 and the thickness T2 of the folded part 201 to be greater than or equal to 0.5 in the groove depth direction of the second groove 2022, the second groove 2022 can have an appropriate groove depth. When a part of the connecting part 2122 is riveted and flanged to form the folded part 201, the second groove 2022 has a relatively large groove depth to accommodate the collapsed edge and the large rounded corner, which reduces the probability of the collapsed edge and the large rounded corner spreading out of the second groove 2022. This is conducive to lowering the probability of a relatively large gap forming between the cover plate 213 and the first groove 2021, and improving the welding reliability between the cover plate 213 and the first groove 2021.

In some embodiments of the present application, the thickness T2 of the folded part 201 may be, but is not limited to, 0.8 mm, 0.9 mm, 1.0 mm, 1.1 mm, 1.2 mm, 1.3 mm, 1.4 mm, 1.5 mm, or the like.

In some embodiments of the present application, referring to FIG. 8, the stepped groove where the cover plate 213 is located is the first groove 2021, the first groove 2021 is provided with the first groove surface 2021a opposite to a peripheral side surface of the cover plate 213, the connecting part 2122 is provided with a first side surface 2122a proximal to the side wall of the via 211a and a second side surface 2122b proximal to the center of the via 211a, a distance between the first side surface 2122a and the second side surface 2122b is L1, and a distance between the first groove surface 2021a and the first side surface 2122a is L2, where 1/2 ≤ L2/L1 ≤ 2/3.

The distance L1 between the first side surface 2122a and the second side surface 2122b may refer to the thickness of the connecting part 2122, and the distance L2 between the first groove surface 2021a and the first side surface 2122a may refer to the thickness of a remaining part of the connecting part 2122 after the first groove 2021 is formed by cutting. L2/L1 may be, but is not limited to, 1/2, 5/12, 6/12, 7/12, 2/3, or the like.

Since the first groove 2021 is relatively proximal to the folded part 201, if L2/L1 is less than 1/2, the thickness of the remaining part of the connecting part 2122 after removing the first groove 2021 is relatively small. This tends to result in insufficient strength of the part of the connecting part 2122 proximal to the folded part 201, making it prone to a local weak point. As the riveting process is involved in the forming process at this position, the dimension at this position is small, which will lead to stress concentration in the remaining part of the connecting part 2122 after removing the first groove 2021 following riveting. After the post terminal 212 and the cover plate 213 are welded, stress release at this position will cause warping and cracking of the flanged area, and insufficient compression of the sealing member 25, resulting in cell leakage from the battery cell. If L2/L1 is greater than 2/3, the thickness of the remaining part of the connecting part 2122 after removing the first groove 2021 is relatively large. Correspondingly, the depth of the first groove 2021 along the first direction X is relatively small, leading to poor support for the cover plate 213, which is not conducive to improving the mounting reliability between the cover plate 213 and the first groove 2021.

In the above technical solutions, by setting the ratio of the distance L1 between the first side surface 2122a and the second side surface 2122b of the connection part 2122 to the distance L2 between the first groove surface 2021a and the first side surface 2122a within a range of 1/2 to 2/3, in one aspect, this can enable a part of the connecting part 2122 proximal to the folded part 201 to have adapted strength, reduce the probability of a local weak point appearing and the probability of cracking caused by stress concentration, and improve the reliability of the connecting part 2122. In another aspect, this can enable the first groove 2021 to have an adapted groove surface to support the cover plate 213, reduce the occurrence of poor mounting reliability between the cover plate 213 and the first groove 2021 due to insufficient support, and is conducive to improving the mounting reliability between the cover plate 213 and the first groove 2021.

In some embodiments of the present application, the distance L2 between the first groove surface 2021a and the first side surface 2122a is greater than or equal to 1 mm. It can be understood that L2 may be, but is not limited to, 1 mm, 1.2 mm, 1.4 mm, 1.6 mm, 1.8 mm, 2.0 mm, 2.2 mm, 2.4 mm, or the like.

In some embodiments of the present application, referring to FIG. 8, the stepped groove where the cover plate 213 is located is the first groove 2021, the first groove 2021 is provided with the first groove surface 2021a and the second groove surface 2021b adjacent to each other, the first groove surface 2021a is opposite to the peripheral side surface of the cover plate 213, the second groove surface 2021b is proximal to the inner side of the housing 211, and a chamfer 2021c is formed between the first groove surface 2021a and the first groove surface 2021b.

In the above technical solutions, the chamfer 2021c can provide a guiding effect for the cover plate 213 to enter the groove, improving the assembly convenience of the cover plate 213. In addition, the chamfer 2021c can also facilitate draft when the first groove surface 2021a is formed on the connecting part 2122, which is conducive to reducing the manufacturing difficulty of the connecting part 2122.

In some embodiments of the present application, an angle of the chamfer 2021c is 5 degrees to 15 degrees.

The angle of the chamfer 2021c may be, but is not limited to, 5 degrees, 6 degrees, 7 degrees, 8 degrees, 9 degrees, 10 degrees, 11 degrees, 12 degrees, 13 degrees, 14 degrees, 15 degrees, or the like. If the angle of the chamfer 2021c is less than 5 degrees, the angle of the chamfer 2021c is relatively small, resulting in a poor guiding effect and unfavorable draft convenience. If the angle of the chamfer 2021c is greater than 15 degrees, the angle of the chamfer 2021c is relatively large, which affects the height of a straight groove surface of the first groove 2021, is not conducive to the bonding between the cover plate 213 and the first groove 2021, and affects the connection reliability between the cover plate 213 and the first groove 2021.

In the above technical solutions, by setting the angle of the chamfer 2021c within a range of 5 degrees to 15 degrees, the chamfer 2021c is kept in an appropriate angle range. In one aspect, this enables the chamfer 2021c to have a relatively good guiding effect and relatively favorable draft convenience; and in another aspect, this also enables the straight groove surface of the first groove 2021 to have an appropriate height, such that the cover plate 213 and the first groove 2021 have good bonding performance and connection reliability.

In some embodiments of the present application, referring to FIG. 8, in the groove depth direction of the first groove 2021, the height of the first groove surface 2021a is greater than or equal to 0.4 mm.

The "groove depth direction of the first groove 2021" may refer to the third direction Z in FIG. 8, and the height of the first groove surface 2021a may be, but is not limited to, 0.4 mm, 0.5 mm, 0.6 mm, 0.7 mm, 0.8 mm, 0.9 mm, 1.0 mm, or the like. It can be understood that if the height h2 of the first groove surface 2021a is less than 0.4 mm, that is, the height of the straight groove surface of the first groove 2021 is relatively small, the height of the bonding surface between the cover side surface 213a and the first groove surface 2021a will be relatively small, and a straight-edge welding area during the welding of the cover plate 213 will be relatively small, which affects the welding strength between the cover plate 213 and the first groove 2021.

In the above technical solutions, by setting the height of the first groove surface 2021a to be greater than or equal to 0.4 mm in the groove depth direction of the first groove 2021, an effective straight-edge welding area is formed between the cover plate 213 and the first groove surface 2021a during welding. This in turn enables the cover plate 213 and the first groove 2021 to have high welding strength, thereby improving the connection reliability between the cover plate 213 and the first groove 2021.

In some embodiments of the present application, referring to FIG. 9, the battery cell 20 further includes a first insulating member 23, a second insulating member 24, and a sealing member 25. The first insulating member 23 is disposed on the first wall 2111, the first insulating member 23 is provided with a through hole 23a, and the through hole 23 is disposed corresponding to the via 211a. The connecting part 2122 is provided in the through hole 23a in a penetrating manner, the connecting part 2122 is sleeved with the sealing member 25, and the connecting part 2122 is sleeved with the second insulating member 24 and the second insulating member is located on the side of the sealing member 25 distal to the first insulating member 23, and the second insulating member 24 is lidded with the cover plate 213. In this technical solution, the folded part 201 formed by riveting and flanging the connecting part 2122 abuts against the sealing member 25.

Optionally, referring to FIG. 9, there may be two post terminals 212, which are a positive electrode post terminal 2001 and a negative electrode post terminal 2002, respectively. There are two through holes 23 and two vias 211a, and two sealing members 25. One of the sealing members 25 is disposed on the positive electrode post terminal 2001 and the other on the negative electrode post terminal 2002.

Optionally, the first insulating member 23 and the second insulating member 24 may be, but are not limited to, plastic members. -

In some embodiments of the present application, referring to FIG. 9, the first wall 2111 is provided with a pressure relief part 26. The pressure relief part 26 can be configured to relieve pressure when the battery cell 20 undergoes thermal runaway, thereby improving the reliability of the battery cell 20.

Optionally, the pressure relief part 26 may be, but is not limited to, an anti-explosion valve, a score groove, a weak part, or the like. Referring to FIG. 9, illustratively, the first wall 2111 is provided with a pressure relief hole 2111a, and the pressure relief part 26 includes an anti-explosion sheet 261 and a protective patch 262. The anti-explosion sheet 261 is disposed in the pressure relief hole 2111a, and the anti-explosion sheet 261 is lidded with the protective patch 262.

According to the battery cell 20 provided in the embodiments of the present application, the housing body 2112 of the battery cell 20 is an aluminum housing. Two-stage steps are added to the post terminal 212, and a welding area is defined in the two-stage step area. In the riveting and flanging process, the riveting mold can effectively extrude a material, ensuring the regular dimensions of a welding interface. In the two-stage steps, the thickness of a first-stage step (the first groove 2021) is greater than 1/2 of the thickness of the flanged area, and the thickness of the flanged area is 1.0 mm. A positioning position of a second-stage step (the second groove 2022) is higher than an upper surface of the top of the aluminum housing, and the thickness of the second-stage step area is 0.6 mm. A distance between an edge of the second-stage step and a thickness of an unflanged straight-edge area of the post terminal 212 is 1 mm, which ensures the strength of the flanged area, avoids a local weak point, and prevents cracking caused by stress concentration. A draft angle needs to be added at the bottom of the second-stage step. The draft angle is 5°, and the height of the straight-edge area is 0.4 mm.

In a second aspect, referring to FIG. 2, the present application further provides a battery 100, which includes the battery cell 20 as described above.

In the above technical solutions, the adoption of the battery cell 20 can reduce the probability of a relatively large gap forming between the cover plate 213 and the first accommodating groove 202 when the post terminal 212 is riveted and flanged, thereby lowering the probability of situations such as spatter occurring during the welding of the cover plate 213. This enables the battery cell 20 to have high reliability, thereby improving the reliability of the battery 100.

In a third aspect, the present application further provides an electric device, which includes the battery cell 20 or the battery 100 as described above.

In the above technical solutions, the adoption of the battery cell 20 can reduce the probability of a relatively large gap forming between the cover plate 213 and the first accommodating groove 202 when the post terminal 212 is riveted and flanged, and lower the probability of situations such as spatter occurring during the welding of the cover plate 213. This enables the battery cell 20 and the battery 100 to have high reliability, thereby improving the reliability of the electric device.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, or the like made within the spirit and principle of the present application shall all fall within the protection scope of the present application.

## Claims

1. A battery cell, comprising:
a housing assembly, comprising a housing, a post terminal, and a cover plate, wherein:
the housing is provided with a first wall, the first wall being provided with a via;
the post terminal comprises a body part and a connecting part connected to each other, wherein the body part is located on an inner side of the first wall, and the connecting part is provided in the via in a penetrating manner and is provided with a folded part and a first accommodating groove, wherein the folded part is located on an outer side of the first wall and is distal to the via, the first accommodating groove is proximal to a center side of the via, and the first accommodating groove comprises at least two stepped grooves; and
the cover plate is disposed on one of the at least two stepped grooves proximal to the body part; and
an electrode assembly, wherein the electrode assembly is disposed within the housing and is electrically connected to the body part or the connecting part.

2. The battery cell according to claim 1, wherein the first accommodating groove comprises at least three stepped grooves.

3. The battery cell according to claim 1 or 2, wherein the stepped groove where the cover plate is located is a first groove, and in a groove depth direction of the first groove, a thickness of the cover plate is less than or equal to a groove depth of the first groove.

4. The battery cell according to claim 3, wherein the groove depth of the first groove is greater than or equal to 0.6 mm.

5. The battery cell according to any one of claims 1 to 4, wherein the stepped groove where the cover plate is located is a first groove, and the first groove is located on a side of the first wall distal to the body part.

6. The battery cell according to any one of claims 1 to 5, wherein the stepped groove where the cover plate is located is a first groove, the first groove is provided with a first groove surface, and a cover side surface is formed on a peripheral side of the cover plate, wherein the cover side surface and the first groove surface are disposed opposite to each other, and a gap is formed between the cover side surface and the first groove surface.

7. The battery cell according to any one of claims 1 to 5, wherein the stepped groove where the cover plate is located is a first groove, the first groove is provided with a first groove surface, and a cover side surface is formed on a peripheral side of the cover plate, wherein the cover side surface and the first groove surface are disposed opposite to each other and abut against each other.

8. The battery cell according to any one of claims 1 to 7, wherein the housing comprises a housing body and an end cover, wherein the housing body is provided with an opening, the opening is lidded with the end cover, and the housing body or the end cover forms the first wall.

9. The battery cell according to any one of claims 1 to 8, wherein:
the connecting part is provided with a second accommodating groove in communication with the first accommodating groove;
the body part is provided with a communication hole in communication with the second accommodating groove; and
the electrode assembly comprises an active substance-coated part and a conductive part connected to each other, wherein the conductive part is provided in the communication hole in a penetrating manner and is electrically connected to the body part or the connecting part.

10. The battery cell according to any one of claims 1 to 9, wherein one of the at least two stepped grooves located on an outermost side of the housing is a second groove, wherein in a groove depth direction of the second groove, a groove depth of the second groove is T1, and a thickness of the folded part is T2, wherein T1/T2 ≥ 0.5.

11. The battery cell according to any one of claims 1 to 10, wherein:
the stepped groove where the cover plate is located is a first groove, and the first groove is provided with a first groove surface opposite to a peripheral side surface of the cover plate; and
the connecting part is provided with a first side surface proximal to a side wall of the via and a second side surface proximal to a center of the via, wherein a distance between the first side surface and the second side surface is L1, and a distance between the first groove surface and the first side surface is L2, wherein 1/2 ≤ L2/L1 ≤ 2/3.

12. The battery cell according to any one of claims 1 to 11, wherein the stepped groove where the cover plate is located is a first groove, the first groove is provided with a first groove surface and a second groove surface adjacent to each other, wherein the first groove surface is opposite to the peripheral side surface of the cover plate, the second groove surface is proximal to an inner side of the housing, and a chamfer is formed between the first groove surface and the first groove surface.

13. The battery cell according to claim 12, wherein an angle of the chamfer is 5 degrees to 15 degrees.

14. The battery cell according to claim 12, wherein in the groove depth direction of the first groove, a height of the first groove surface is greater than or equal to 0.4 mm.

15. A battery, comprising the battery cell according to any one of claims 1 to 14.

16. An electric device, comprising the battery cell according to any one of claims 1 to 14 or the battery according to claim 15.
